(19) Europäisches Patentamt
European Patent Office
Office européen des brevets

(11) **EP 2 759 831 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(51) Int Cl.:
***G01N 25/48*** *(2006.01)*

(21) Anmeldenummer: **14000236.1**

(22) Anmeldetag: **23.01.2014**

(54) **Verfahren zur Durchführung einer Differenz-Thermo-Analyse**

Method for performing a differential thermo analysis

Procédé de réalisation d'une analyse thermique différentielle

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2013 DE 102013100686**

(43) Veröffentlichungstag der Anmeldung:
**30.07.2014 Patentblatt 2014/31**

(73) Patentinhaber: **Netzsch Gerätebau GmbH 95100 Selb (DE)**

(72) Erfinder:
- **Denner, Thomas**
  **95100 Selb (DE)**
- **Blumm, Jürgen**
  **95100 Selb (DE)**
- **Schaefer, Otto Max**
  **95100 Selb (DE)**
- **Hollering, Markus**
  **95632 Wunsiedel (DE)**
- **Hilpert, Thilo**
  **95100 Selb (DE)**
- **Frenzl, Alexander**
  **95173 Schönwald (DE)**
- **Lauterbach, Stefan**
  **95100 Selb (DE)**
- **Strobel, Andreas**
  **08209 Auerbach (DE)**
- **Preuss, Rolf**
  **37574 Einbeck (DE)**
- **Gebhardt, Michael**
  **95100 Selb (DE)**
- **Moukhina, Elena**
  **95100 Selb (DE)**
- **Schindler, Alexander**
  **95191 Leupoldsgrün (DE)**
- **Knappe, Stephan**
  **95182 Döhlau (DE)**
- **Kaiser, Gabriele**
  **95100 Selb (DE)**
- **Meyer, Markus**
  **86678 Ehingen (DE)**
- **Herr, Gunther**
  **96253 Haarth (DE)**
- **Gradl, Matthias**
  **96145 Seßlach (DE)**

(56) Entgegenhaltungen:
CH-A5- 690 627      DE-A1- 19 934 448

- **SHEFFIELD G S ET AL: "Single thermocouple differential thermal analysis with application to quantitative low level detection of free crystalline quartz", THERMOCHIMICA ACTA, ELSEVIER SCIENCE PUBLISHERS, AMSTERDAM, NL, Bd. 32, Nr. 1-2, 1. September 1979 (1979-09-01), Seiten 45-52, XP026536879, ISSN: 0040-6031, DOI: 10.1016/0040-6031(79)85089-3 [gefunden am 1979-09-01]**

EP 2 759 831 B1

**Beschreibung**

Die vorliegende Erfindung betrifft ein Verfahren zur Durchführung einer Differenz-Thermo-Analyse, oftmals auch als "DTA" bezeichnet, nach dem Oberbegriff des Anspruchs 1.

Bei einem derartigen gattungsgemäßen Verfahren, im engeren Sinne auch als "berechnete Differenz-Thermo-Analyse"-Verfahren bzw. cDTA-Verfahren bezeichnet, wird eine in einem temperierbaren Probenraum angeordnete Probe gemäß eines im Wesentlichen linearen Temperaturprogramms ausgehend von einer Starttemperatur bis zu einer Endtemperatur temperiert. Aus dem Ergebnis einer während der Temperierung zu einer Vielzahl von Messzeitpunkten durchgeführten Messung der Probentemperatur wird ein so genanntes "cDTA-Signal" als Differenz zwischen gemessener Probentemperatur und einer gemäß eines Temperaturverlaufmodells berechneten Referenztemperatur berechnet.

Ein derartiges cDTA-Verfahren ist aus der DE 199 34 448 A1 bekannt. Bei dem bekannten Verfahren wird eine Probe nach einem linearen Temperaturprogramm (d. h. mit im Wesentlichen gleichbleibender Temperaturänderungsrate) aufgeheizt oder abgekühlt, ausgehend von einer Starttemperatur TS bis hin zu einer Endtemperatur TF. Während dieser Temperierung wird mittels eines Probenthermoelements die Probentemperatur gemessen und gespeichert.

Aus der Starttemperatur TS, der Endtemperatur TF sowie den zugehörigen Zeitpunkten, d. h. einer Startzeit tS und einer Endzeit tF, lässt sich eine mittlere Temperierungsrate (Heizrate bzw. Kühlrate) β wie folgt berechnen:

$$\beta = (TF - TS)/(tF - tS) \quad \text{(Formel 1)}$$

Gemäß des linearen Temperaturprogramms kann in einfacher Weise ein Temperaturverlaufsmodell bzw. eine "berechnete Probentemperatur" TC für jeden Zeitpunkt t wie folgt angegeben werden:

$$TC(t) = TS + \beta \times (t - tS) \quad \text{(Formel 2)}$$

Ein als Ergebnis der Differenz-Thermo-Analyse benötigtes DTA-Signal cDTA(t) wird sodann als Differenz zwischen der mittels des Proben-Thermoelements gemessenen Probentemperatur T(t) und der gemäß Formel 2 berechneten Referenztemperatur TC(t) berechnet:

$$cDTA(t) = TC(t) - T(t)$$

Ein von Null verschiedenes cDTA-Signal deutet auf thermische Effekte in der Probe hin, z. B. auf Wärmetönungen (Enthalpieänderungen) aufgrund von Phasenübergängen oder dergleichen. Derartige Effekte sind es, die im Rahmen einer Differenz-Thermo-Analyse zumeist von besonderem Interesse sind, und die im Verlauf des cDTA-Signals erkennbar sind.

An dieser Stelle ist anzumerken, dass bei Differenz-Thermo-Analysen der hier interessierenden Art während der Temperierung neben der Probentemperatur in zeitabgelöster Weise, etwa zu denselben Messzeitpunkten wie bei der Probentemperaturmessung, auch andere Parameter bzw. Probeneigenschaften gemessen (und gespeichert) werden können (z. B. Massenänderungen der Probe etc.).

Wenngleich derartige zusätzliche Messungen, für deren Auswahl bzw. konkrete Gestaltung auf den allgemeinen Stand der Technik betreffend Differenz-Thermo-Analysen zurückgegriffen werden kann, auch im Rahmen des erfindungsgemäßen Verfahrens bevorzugt sind, so ist dies für die Erfindung von eher untergeordneter Bedeutung. Die Erfindung betrifft im Kern die Art und Weise der Ermittlung des cDTA-Signals auf Basis der während der Temperierung zeitaufgelöst gemessenen Probentemperatur.

Nachteilig ist bei dem aus der DE 199 34 448 A1 bekannten Verfahren, dass ein von Null verschiedenes cDTA-Signal auch aus einer Nichtlinearität des Temperaturprogramms, also einer nichtlinear im Zeitverlauf sich ändernden Temperatur resultieren kann. Eine in der Praxis unvermeidbare Nichtlinearität des Temperaturprogramms führt bei dem bekannten Verfahren somit zu einer entsprechenden Verfälschung des cDTA-Signals, welches im Idealfall lediglich die thermischen Effekte in der Probe repräsentieren bzw. aufzeigen soll.

Um mit dem cDTA-Signal vor allem die thermischen Effekte darzustellen, kommt prinzipiell in Betracht, wie in der DE 199 34 448 A1 ebenfalls offenbart, die Auswertung der gemessenen Probentemperatur bzw. die Berechnung des cDTA-Signals lediglich für ein (relativ kleines) Segment der Gesamtdauer des Temperaturprogramms vorzunehmen. In diesem Fall ist der Einfluss einer Nichtlinearität der (Gesamt-)Temperaturkurve eher gering. Nachteiligerweise erhält man dann das cDTA-Signal jedoch nur für diesen relativ kleinen Teilbereich.

Aus der Veröffentlichung SHEFFIELD G S ET AL: "Single thermocouple differential thermal analysis with application to quantitative low level detection of free crystalline quartz", THERMOCHIMICA ACTA, ELSEVIER SCIENCE PUBLISHERS, AMSTERDAM, NL, Bd. 32, Nr. 1-2, 1. September 1979, Seiten 45-52, ist es zudem bekannt eine nicht-lineare Anpassungsfunktion zur Berechnung der Referenztemperatur zu verwenden.

Es ist daher eine Aufgabe der vorliegenden Erfindung, bei einem Differenz-Thermo-Analyse-Verfahren der eingangs genannten Art die Qualität des ermittelten cDTA-Signals zu verbessern, insbesondere auch bei Vorliegen einer nicht ideal linearen Temperierung und/oder bei Ermittlung des cDTA-Signals über einen großen Bereich der Temperierungsdauer bzw. über die Gesamtdauer der Temperierung.

Diese Aufgabe wird gemäß der Erfindung (vgl. Anspruch 1) dadurch gelöst, dass für jeden Messzeitpunkt die zugehörige Referenztemperatur durch folgende Schritte berechnet wird:

a) Festlegung eines den betreffenden Messzeitpunkt ($t_i$) enthaltenden Zeitintervalls, derart, dass der betreffende Messzeitpunkt ($t_i$) in der Mitte des Zeitintervalls oder in einem Abstand zur Mitte des Zeitintervalls liegt, der kleiner als 30 % der Länge des Zeitintervalls ist,

b1) Berechnen einer nicht-linearen Anpassungsfunktion für den gemessenen Probentemperaturverlauf ($TSample(t)$) in dem für den betreffenden Messzeitpunkt ($t_i$) im Schritt a) festgelegten Zeitintervall,

c) Berechnen der dem betreffenden Messzeitpunkt ($t_i$) zugehörigen Referenztemperatur ($TRef(t_i)$) als Wert der im Schritt b1) berechneten Anpassungsfunktion für den Messzeitpunkt ($t_i$).

Die Grundidee der Erfindung besteht somit darin, für jeden Temperaturmesspunkt eine als Referenztemperatur dienende eigene Anpassungskurve (Anpassungsfunktion) zu berechnen, wobei hierfür gemessene Temperaturdaten vor dem betreffenden Temperaturmesspunkt und/oder nach diesem Temperaturmesspunkt, nämlich in einem vorbestimmten, den Temperaturmesszeitpunkt enthaltenden Zeitintervall berücksichtigt werden, und wobei hierbei eine nicht-lineare Anpassungsfunktion verwendet wird.

Die Festlegung eines den betreffenden Messzeitpunkt enthaltenden Zeitintervalls kann vorteilhaft automatisiert (z. B. programmgesteuert im Rahmen eines Messprogramms) erfolgen und trägt vorteilhaft zu einer Verringerung des Einflusses der in der Praxis unvermeidlichen Nichtlinearität auf das Berechnungsergebnis bei. Eine etwaig noch merkliche Nichtlinearität für den Teilbereich des "relativ kurzen" Zeitintervalls wird sodann noch durch Verwendung einer nicht-linearen Anpassungsfunktion vorteilhaft zumindest teilweise kompensiert bzw. eliminiert. Schließlich kann durch solche eigens durchgeführte Berechnungen für weitere Messzeitpunkte das erfindungsgemäß qualitativ verbesserte cDTA-Signal vorteilhaft ohne Weiteres für größere Bereiche bis hin zur Gesamtdauer des Temperaturprogramms ermittelt werden.

Bei der Temperierung kann es sich um eine Aufheizung oder eine Abkühlung der Probe handeln. Das Temperaturprogramm kann eine Differenz zwischen Starttemperatur und Endtemperatur von beispielsweise mindestens 50 K vorsehen.

Die über die Gesamtdauer des Temperaturprogramms gemittelte Temperierungsrate kann z. B. im Bereich von 1 bis 50 K/min liegen.

Die im Verlauf des Temperaturprogramms vorgesehenen Messzeitpunkte können z. B. zeitlich äquidistant vorgesehen sein, z. B. mit einer Messrate von mindestens 6 Messungen/Minute oder mindestens 1 Messung/Sekunde.

Über die Gesamtdauer des Temperaturprogramms können z. B. mehr als 50, insbesondere mehr als 100 Probentemperaturmessungen durchgeführt und gespeichert werden. Diese Gesamtanzahl von Messzeitpunkten kann in der Praxis z. B. abhängig von Temperaturbereich, Heizrate und Erfassungsrate gewählt werden. Eine Gesamtanzahl von maximal 5000, insbesondere maximal 2000 Messzeitpunkten ist vorteilhaft zur Begrenzung der Datenmenge, und für viele Anwendungsfälle ausreichend.

In einer Ausführungsform ist vorgesehen, dass im Schritt a) der Beginn des Zeitintervalls um eine Zeitspanne vor dem betreffenden Messzeitpunkt festgelegt wird, die vom Messzeitpunkt abhängig ist. Beispielsweise kann diese Zeitspanne umso größer sein, je später der betreffende Messzeitpunkt liegt. Insbesondere kann die Zeitspanne z. B. als proportional zum Messzeitpunkt (Zeit der betreffenden Messung bezogen auf den Startzeitpunkt des Temperaturprogramms) festgelegt werden. Der Proportionalitätsfaktor kann hierbei insbesondere im Bereich von 0,1 bis 0,6, weiter bevorzugt im Bereich von 0,2 bis 0,5 liegen. Dies trägt vorteilhaft dem Umstand Rechnung, dass in der Praxis die Nichtlinearität des Temperierungsverlaufes am Anfang eher groß ist und im weiteren Zeitverlauf eher abnimmt.

In einer Ausführungsform ist vorgesehen, dass im Schritt a) das Ende des Zeitintervalls um eine Zeitspanne nach dem betreffenden Messzeitpunkt festgelegt wird, die vom Messzeitpunkt abhängig ist. Beispielsweise kann diese Zeitspanne umso größer sein, je später der betreffende Messzeitpunkt liegt. Insbesondere kann die Zeitspanne z. B. als proportional zum Messzeitpunkt (bezogen auf den Startzeitpunkt des Temperaturprogramms) festgelegt werden. Der Proportionalitätsfaktor kann hierbei insbesondere im Bereich von 0,1 bis 0,6, weiter bevorzugt im Bereich von 0,2 bis 0,5 liegen.

In einer Ausführungsform ist vorgesehen, dass im Schritt a) die Länge des Zeitintervalls in Abhängigkeit vom Messzeitpunkt festgelegt wird. Beispielsweise kann diese Zeitintervalllänge umso größer sein, je später der betreffende Messzeitpunkt liegt. Insbesondere kann die Zeitspanne z. B. als proportional zum Messzeitpunkt (bezogen auf den Startzeitpunkt des Temperaturprogramms) festgelegt werden. Der Proportionalitätsfaktor kann hierbei insbesondere im Bereich von 0,4 bis 0,9, weiter bevorzugt im Bereich von 0,5 bis 0,8 liegen.

In einer Ausführungsform ist vorgesehen, dass im Schritt a) im Falle eines vor den Startzeitpunkt oder nach den Endzeitpunkt des Temperaturprogramms reichenden Zeitintervalls für die Durchführung des Schrittes b) eine Extrapolation, bevorzugt lineare Extrapolation, der vor dem Startzeitpunkt bzw. nach dem Endzeitpunkt zu verwendenden Probentemperaturen durchgeführt wird. Dies ermöglicht in einfacher Weise insbesondere die Berechnung des cDTA-Signals über die Gesamtdauer des Temperaturprogramms.

In einer bevorzugten Ausführungsform wird im Schritt b1) als die Anpassungsfunktion ein Polynom zweiten Grades verwendet. Wenngleich im Rahmen der Erfindung auch kompliziertere Anpassungsfunktionen ("Fit-Funktionen") eingesetzt werden können, so hat es sich in der Praxis als zumeist völlig ausreichend herausgestellt, ein Polynom zweiten Grades zu verwenden, mittels welchem also der im Stand der Technik durch eine einfache Gerade modellierte Referenztemperaturverlauf durch einen parabelförmigen Referenztemperaturverlauf ersetzt wird.

Gemäß einer Weiterbildung der Erfindung wird der Schritt b1) durch folgende Schritte ergänzt:

b2) Unterdrückung von Messzeitpunkten, für welche die gemessene Probentemperatur um mehr als einen vorbestimmten Betrag von dem zugehörigen Wert der Anpassungsfunktion abweicht, und

b3) Berechnen einer korrigierten Anpassungsfunktion zur Verwendung im Schritt c), wie in Schritt b1), jedoch unter Außerachtlassung oder Geringgewichtung der unterdrückten Messpunkte.

Durch diese zusätzlichen Schritte b2) und b3) wird gewissermaßen eine Verbesserung bzw. Korrektur der zuvor (im Schritt b1) berechneten Anpassungsfunktion vorgenommen. Bevorzugt wird bei der Berechnung gemäß Schritt b3) wieder ein Polynom zweiten Grades als Anpassungsfunktion verwendet. Bei dem eingesetzten Anpassungs- bzw. Fit-Algorithmus werden jedoch die im Schritt b2) ausgewählten bzw. unterdrückten Messzeitpunkte bzw. Messungen entweder ganz außer Acht gelassen, so als ob diese Messungen gar nicht existieren würden, oder vom betreffenden Algorithmus mit einer geringeren Gewichtung berücksichtigt (z. B. normale Gewichtung: 1; Gewichtung der unterdrückten Messpunkte: 0,5 oder weniger).

In einer Ausführungsform ist vorgesehen, dass im Schritt b1) die Berechnung der Anpassungsfunktion unter Berücksichtigung einer Gewichtung der im Zeitintervall liegenden Probentemperaturen durchgeführt wird.

Ein Maximalwert der hierfür verwendeten Gewichtungsfunktion ist hierbei bevorzugt für den betreffenden Messzeitpunkt oder in der Nähe dieses Messzeitpunktes gegeben, z. B. nicht weiter als 20 % der Zeitintervalllänge von diesem Messzeitpunkt enfernt.

Bevorzugt nimmt das Gewicht (Wert der Gewichtungsfunktion) monoton oder streng monoton mit zunehmendem zeitlichen Abstand vom betreffenden Maximumzeitpunkt ab.

In einer Ausführungsform ist als Gewichtungsfunktion z. B. eine im Wesentlichen am betreffenden Messzeitpunkt zentrierte (ein Maximum aufweisende) Gaussfunktion vorgesehen (das Maximum kann hierbei z. B. exakt am Messzeitpunkt oder z. B. weniger als 20 % der Zeitintervalllänge davon entfernt liegen).

Die Breite einer solchen Gaussfunktion oder einer anderen ähnlichen, beiderseits des betreffenden Messzeitpunktes monoton oder streng monoton abfallenden Gewichtungsfunktion ist gemäß einer Weiterbildung als vom Messzeitpunkt (bezogen auf den Startzeitpunkt) abhängig vorgesehen. Beispielsweise kann eine zu diesem Messzeitpunkt proportionale Breite vorgesehen sein, wobei der Proportionalitätsfaktor insbesondere z. B. im Bereich von 0,1 bis 0,6, weiter bevorzugt im Bereich von 0,2 bis 0,5 liegen kann. Als "Breite" kann hierbei z. B. die Halbwertsbreite der betreffenden Gewichtungsfunktion angesehen werden.

Es versteht sich, dass bei dem erfindungsgemäßen Differenz-Thermo-Analyse Verfahren neben der Probentemperatur während der Temperierung insbesondere auch beispielsweise eine oder mehrere der folgenden Größen gemessen werden:

- Masse der Probe,

- eine geometrische Abmessung (z. B. Länge) der Probe, gegebenenfalls unter kontrollierter mechanischer Belastung,

- eine elektrische Eigenschaft der Probe, beispielsweise ein dielektrischer Verlustfaktor (oder das Reziproke davon, die "Ionenviskosität"),

- eine magnetische Eigenschaft der Probe,

- eine Gasabgabe (Menge und/oder inhaltliche Zusammensetzung), z. B. unter Einsatz eines Massenspektrometers und/oder eines FTIR-Spektrometers.

Die Durchführung derartiger Messungen, einschließlich der gemäß der Erfindung notwendigen Messung der Probentemperatur, kann automatisiert erfolgen, etwa im Rahmen eines das Analyseverfahren insgesamt steuernden Programms, welches also insbesondere auch die Ansteuerung einer Temperierungseinrichtung des betreffenden Analysegerätes zur Erzielung des im Wesentlichen linearen Temperaturprogramms bewerkstelligt. Durch eine derartige Steuersoftware können auch sämtliche hier beschriebenen Berechnungsschritte zur Ermittlung des cDTA-Signals implementiert sein.

Die Erfindung wird nachfolgend anhand von Ausführungsbeispielen mit Bezug auf die beigefügten Zeichnungen weiter beschrieben. Es stellen dar:

Fig. 1 ein Diagramm zur Veranschaulichung eines bei einer berechnete Differenz-Thermo-Analyse durchgeführten Temperaturprogramms (von der Zeit t abhängige Probentemperatur TSample) und der Ermittlung eines cDTA-Signals cDTA(ti) für einen bestimmten Messzeitpunkt (ti),

Fig. 2 eine der Fig. 1 entsprechende Zeitverlaufsdarstellung, in welcher das für die Gesamtdauer des Temperaturprogramms sich ergebende cDTA-Signal cDTA(t) eingezeichnet ist, und

Fig. 3 eine Zeitverlaufsdarstellung, bei welcher neben der gemessenen Probentemperatur TSample auch eine gemäß einer modifizierten cDTA-Ermittlung verwendete Gewichtungsfunktion F(t) für die modifizierte Berechnung eines cDTA-Wertes cDTA(ti) für einen bestimmten Zeitpunkt (ti) eingezeichnet ist.

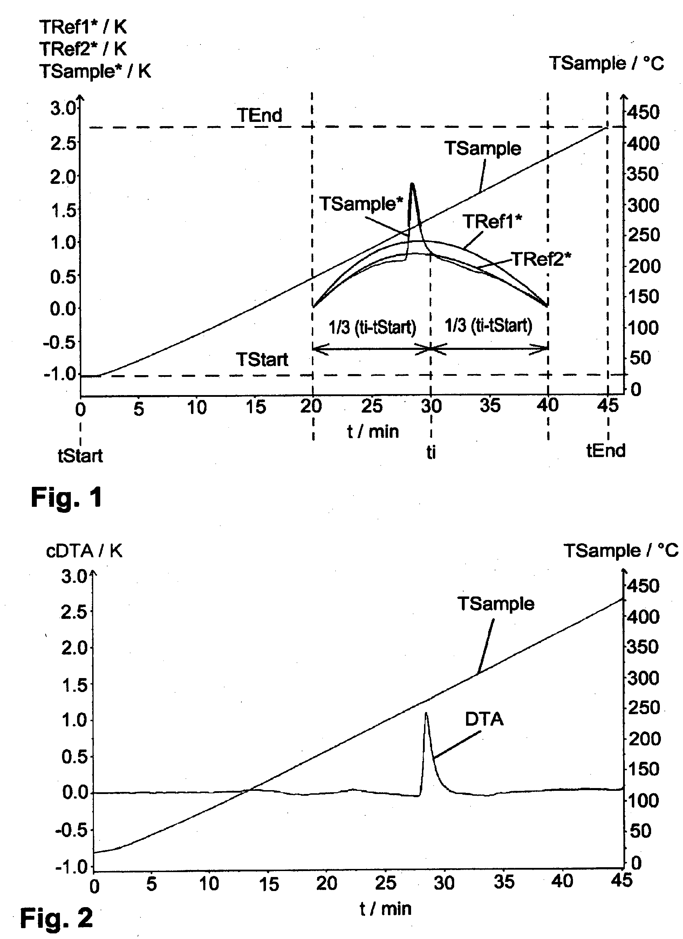

Die Fig. 1 und 2 veranschaulichen ein erstes Ausführungsbeispiel eines Verfahrens zur Durchführung einer Differenz-Thermo-Analyse, bei welchem eine in einem temperierbaren Probenraum (z. B. elektrisch heizbarer und/oder kühlbarer Ofen) angeordnete Probe gemäß eines im Wesentlichen linearen Temperaturprogramms ausgehend von einer Starttemperatur TStart bis hin zu einer Endtemperatur TEnd temperiert wird.

Im dargestellten Beispiel handelt es sich bei der Temperierung um eine Aufheizung der Probe (Probentemperatur TSample) ausgehend von einer Starttemperatur von TSample = 25 °C zu einem Startzeitpunkt tStart = 0 min bis hin zu einer Endtemperatur TEnd = 425 °C bei einem Endzeitpunkt tEnd = 45 min des Temperaturprogramms.

Die Realisierung eines derartigen, im Wesentlichen linearen Temperaturprogramms, d. h: zur Erzielung eines im Wesentlichen linearen Temperaturanstieges im Probenraum im Zeitraum von tStart bis tEnd kann in an sich bekannter Weise unter Verwendung eines elektrisch beheizbaren Ofens (Probenraum) erfolgen, etwa programmgesteuert und/oder unter Verwendung eines PID-Reglers oder dergleichen.

Ganz allgemein geht es bei der thermischen Analyse darum, das Verhalten von Proben bzw. Materialien bei Änderungen der Temperatur zu untersuchen. Eine lineare Temperaturänderung des Probenraumes (z. B. Innenraum eines Ofens) bewirkt mit zeitlichem Versatz eine entsprechende Probentemperatur TSample, und eine entsprechende lineare Änderung der Probentemperatur TSample im Zeitverlauf.

Die Probentemperatur TSample kann z. B. mit einem an der Probe angeordneten Thermoelement oder einer anderen hierfür geeigneten Temperaturmesseinrichtung gemessen werden. Diese Messung erfolgt zeitaufgelöst während der Temperierung zu einer Vielzahl von Messzeitpunkten t0 (= tStart), t1, t2, t3 ... ti, ... tn-2, tn-1, tn (= tEnd).

Außerdem können während der Temperierung in an sich bekannter Weise weitere Signale gemessen werden, welche repräsentativ für bestimmte Parameter bzw. Eigenschaften der Probe sind. Lediglich beispielhaft sei hier die Messung einer Massenänderung (Thermogravimetrie), die Messung einer Längenänderung (Dilatometrie) bzw. Längenänderung unter kontrollierter Belastung (Thermisch-mechanische Analyse), die Messung einer Ionenviskositätsänderung (Dielektrische Analyse) sowie die Messung einer Gasabgabe (Menge und/oder Zusammensetzung), z. B. unter Verwendung eines Massenspektrometers oder FTIR-Spektrometers genannt.

Entsprechende zusätzliche Messwerte können z. B. zu den gleichen Messzeitpunkten t0, t1, t2,... wie für die Probentemperaturmessung aufgenommen und abgespeichert werden.

Zur Ermittlung und Analyse von Wärmetönungen (Enthalpieänderungen) im Verlauf der Probentemperierung, beispielsweise durch Phasenübergänge bedingt, ist es z. B. aus der eingangs genannten DE 199 34 448 A1 bereits bekannt, aus dem Ergebnis der während der Temperierung durchgeführten Messung der Probentemperatur (vgl. TSample in Fig. 1) ein so genanntes cDTA (berechnete Differenz-Thermo-Analyse)-Signal als Differenz zwischen der gemessenen Probentemperatur TSample und einer gemäß eines idealisiert linear angenommenen Temperaturverlaufs berechneten Referenztemperatur TRef zu berechnen. Diejenigen Stellen im zeitlichen Temperierungsverlauf, an denen das cDTA-Signal von Null verschieden ist, können als Stellen mit einer Wärmetönung (exotherm oder endotherm, je nach Vorzeichen der Abweichung) interpretiert werden.

Würde man das bekannte Verfahren zur Berechnung des cDTA-Signals bei dem Beispiel gemäß Fig. 1 anwenden, so könnte das zeitabhängige cDTA-Signal DTA(t) wie folgt berechnet werden:

$$\text{cDTA}(t) = \text{TRef}(t) - \text{TSample}(t),$$

mit

$$\text{TRef}(t) = \text{TStart} + \beta \times (t - \text{tStart}),$$

wobei $\beta$ = (TEnd - TStart)/(tEnd - tStart) gilt; $\beta$ also die mittlere Temperaturänderungsrate über den Temperierungsverlauf ist, und wobei TSample(t) die mittels des Thermoelements gemessene (tatsächliche) Probentemperatur ist.

Nachteilig ist hierbei, dass ein von Null abweichendes cDTA-Signal gemäß dieser bekannten Ermittlungsmethode auch wegen einer (in der Praxis unvermeidlichen) Nichtlinearität des Temperaturprogramms entstehen kann, also das DTA-Signal durch eine derartige Nichtlinearität mehr oder weniger verfälscht wird.

Gemäß der vorliegenden Erfindung wird ein verbessertes Verfahren zur Berechnung des cDTA-Signals cDTA(t) verwendet, welches nachfolgend mit Bezug auf die Fig. 1 und 2 gemäß eines Ausführungsbeispiels detaillierter beschrieben wird.

In einem ersten Schritt wird für jeden gewünschten Messzeitpunkt (für welchen ein Wert des cDTA-Signals berechnet werden soll) ein den betreffenden Messzeitpunkt enthaltendes Zeitintervall festgelegt.

In Fig. 1 ist diese Festlegung des Zeitintervalls beispielhaft für einen bestimmten Zeitpunkt ti veranschaulicht (ti = 30 min). Im dargestellten Beispiel wird die Position und die Breite des Zeitintervalls in Abhängigkeit von der Zeitdifferenz zwischen dem ersten Messzeitpunkt tStart und dem aktuellen, betreffenden Messzeitpunkt ti festgelegt, und zwar proportional zu dieser Zeitdifferenz.

Im dargestellten Beispiel beginnt das Zeitintervall eine Zeitspanne von 1/3 x (ti - tStart) vor ti und endet eine Zeitspanne von 1/3 x (ti - tStart) nach ti. Dieses Zeitintervall, welches in nachfolgend beschriebener Weise als ein "Auswertebereich" zur Berechnung des Wertes cDTA(ti) dient, ist in Fig. 1 gestrichelt eingezeichnet. Es erstreckt sich im dargestellten Beispiel von t = 20 min bis t = 40 min, wobei der betreffende Messzeitpunkt somit in der Mitte des Zeitintervalls liegt. Letzteres ist im Rahmen der Erfindung jedoch keineswegs notwendig. Vielmehr kann der betreffende Zeitpunkt auch in einem gewissen Abstand zur Zeitintervallmitte liegen, wobei in diesem Fall der Abstand kleiner als 30 %, insbesondere kleiner als 20 % der Zeitintervalllänge ist.

In einem zweiten Schritt wird durch Anwendung eines geeigneten Anpassungs- bzw. Fit-Algorithmus (Derartige Algorithmen sind aus dem Stand der Technik hinlänglich bekannt) eine nichtlineare Anpassungsfunktion TRef1 (t) für den gemessenen Probentemperaturverlauf TSample(t) im zuvor festgelegten Zeitintervall (hier von 20 min bis 40 min) berechnet.

Der verwendete Algorithmus kann z. B. so ausgestaltet sein, dass durch die Anpassung die Probentemperaturen TSample am Beginn (t = 20 min) und am Ende (t = 40 min) des Zeitintervalls exakt reproduziert werden, d. h. im dargestellten Beispiel TRef1(20 min) = TSample(20 min) und TRef1(40 min) = TSample(40 min) gilt. Im Allgemeinen ist es jedoch bevorzugt, dass der verwendete Algorithmus kein derartiges exaktes Anpassen bestimmter Anpassungsfunktionswerte an bestimmte tatsächliche Probentemperaturwerte vorsieht, sondern, abgesehen von dem hier auch beschriebenen Fall einer Anpassungsfunktion unter Berücksichtigung einer Gewichtung, eine möglichst gleichmäßig gut an alle Probentemperaturmesswerte angepasste Anpassungsfunktion liefert. In dieser Hinsicht können insbesondere z. B. Anpassungsalgorithmen verwendet werden, die auf der "Methode der kleinsten Quadrate" basieren.

Im dargestellten Beispiel wird als die Anpassungsfunktion ein Polynom zweiten Grades verwendet, z. B. berechnet nach der Methode der kleinsten Quadrate. Abweichend von diesem Beispiel könnte auch ein Polynom höheren Grades oder eine andere Anpassungsfunktion verwendet werden.

In Fig. 1 dargestellt ist nicht unmittelbar die berechnete Anpassungsfunktion TRef1, sondern gemäß einer modifizierten Darstellungsweise eine Anpassungsfunktion TRef1*, welche die Differenz zwischen einer "Geraden" durch die beiden das Zeitintervall begrenzenden Temperaturmesspunkte und der berechneten Anpassungsfunktion TRef1 darstellt.

Wie aus Fig. 1 ersichtlich, ergibt sich, entsprechend der hier als Polynom zweiten Grades verwendeten Anpassungsfunktion, für den Verlauf von TRef1* eine Parabel. Dasselbe gilt für den Verlauf der (in Fig. 1 nicht dargestellten), nicht auf die "Gerade" bezogene Anpassungskurve TRef1.

In einem dritten Schritt werden im vorgenannten Zeitintervall diejenigen Temperaturmesspunkte eliminiert, welche relativ "weitab" von der ermittelten Anpassungskurve (Anpassungsfunktion TRef1) liegen. In Fig. 1 ist im Zeitintervall ebenfalls eine Temperaturverlaufskurve TSample* eingezeichnet, welche die wieder auf die "Gerade" bezogene Probentemperatur TSample darstellt. Die erwähnte Eliminierung von weitab liegenden Temperaturmesspunkten entspricht demnach in Fig. 1 einer Eliminierung von denjenigen Punkten der Kurve TSample*, deren Temperaturwert stärker von der Temperatur gemäß Anpassungskurve TRef1* abweicht.

Im dargestellten Beispiel werden z. B. alle Messpunkte eliminiert, bei denen der Betrag der Abweichung TSample - TRef1 (gleichbedeutend mit TSample* - TRef1*) größer als 50% der Maximalabweichung zwischen diesen beiden Kurven im Zeitintervall ist. In Fig. 1 ist ein Bereich von demnach zu eliminierenden Messpunkten der Kurve TSample* fett hervorgehoben.

In einem vierten Schritt wird sodann eine korrigierte Anpassungsfunktion TRef2 berechnet, und zwar wie im oben bereits erläuterten zweiten Schritt, jedoch unter Außerachtlassung der im dritten Schritt eliminierten Messpunkte. Mit anderen Worten wird nochmals eine nicht-lineare Anpassungsfunktion TRef2, hier wieder ein Polynom zweiten Grades, für den gemessenen Probentemperaturverlauf TSample, jedoch ohne die aus diesem Verlauf eliminierten Messpunkte berechnet. Als Anpassungsalgorithmus kann z. B. derselbe Algorithmus verwendet werden, der bereits im oben erwähnten zweiten Schritt verwendet wurde.

In Fig. 1 ist wieder nicht unmittelbar das Ergebnis dieser "korrigierten" Anpassung, also TRef2 dargestellt, sondern der entsprechende auf die "Gerade" bezogene Verlauf TRef2*.

Im beschriebenen Beispiel wurde im dritten Schritt eine Eliminierung bestimmter ("weitab" von der ermittelten Anpassungskurve liegender) Temperaturmesspunkte vorgenommen, so dass die im vierten Schritt sodann berechnete korrigierte Anpassungsfunktion TRef2 unter Außerachtlassung dieser eliminierten Messpunkte erfolgt. Alternativ zu einer Eliminierung bestimmter Temperaturmesspunkte könnte im dritten Schritt auch eine Unterdrückung dieser Messzeitpunkte dergestalt vorgesehen sein, dass diesen weitab liegenden Messpunkten ein im sodann auszuführenden vierten Schritt "niedrigeres Gewicht" als den übrigen Messzeitpunkten zugemessen wird. Die im vierten Schritt berechnete Anpassungsfunktion TRef2 wird somit vor allem bzw. besser an die übrigen (nicht weitab liegenden) Messpunkte angepasst, und entsprechend ihrem geringeren Gewicht weniger an die weit ab liegenden Messpunkte. In einer Weiterbildung dieser Modifikation kann vorgesehen sein, dass das im dritten Schritt zwecks Messpunktunterdrückung vergebene Gewicht in Abhängigkeit von einer Größe vergeben wird, die repräsentativ für die jeweilige Abweichung zwischen dem Wert der Temperaturkurve und dem Wert der Anpassungskurve (für die gleiche Zeit t) ist.

Im vorliegenden Ausführungsbeispiel wird der Verlauf von TRef2*, gleichbedeutend mit TRef2, in einem nachfolgenden fünften Schritt als Verlauf einer Referenztemperatur zur Berechnung von cDTA(ti) verwendet. Abweichend davon könnten die obigen dritten und vierten Schritte jedoch noch einmal oder noch öfter wiederholt werden, um dementsprechend eine einfach oder mehrfach weiter korrigierte Anpassungsfunktion zu berechnen, wobei die zuletzt berechnete Anpassungsfunktion dann für den nachfolgenden fünften Schritt als Referenztemperaturverlauf verwendet wird.

In einem fünften Schritt erfolgt eine Berechnung der Referenztemperatur für den Zeitpunkt ti als Wert der Anpassungsfunktion TRef2 für den Messzeitpunkt ti.

Nach Durchführung der obigen fünf Schritte kann der für den Messzeitpunkt ti sich ergebende DTA-Signalwert cDTA(ti) berechnet werden als:

$$cDTA(ti) = TRef2(ti) - TSample(ti),$$

oder gleichbedeutend

$$cDTA(ti) = TSample*(ti) - TRef2*(ti).$$

Die obigen fünf Schritte und abschließende Berechnung des cDTA-Signalwertes cDTA(ti) wird sodann für alle gewünschten weiteren Messzeitpunkte durchgeführt, um letztlich das gewünschte DTA-Signal cDTA(t) zu erhalten.

Fig. 2 zeigt das somit für das dargestellte Ausführungsbeispiel sich ergebende cDTA-Signal cDTA(t) für die Gesamtdauer des Temperaturprogramms, d. h. von tStart. bis tEnd. Hierbei ist folgendes anzumerken: Bei der Durchführung der obigen Schritte für Messzeitpunkte nahe des Endzeitpunktes tEnd reicht das im ersten Schritt festzulegende Zeitintervall über den Endzeitpunkt hinaus. In diesem Bereich "jenseits der Zeitdauer des Temperaturprogramms" werden zur Durchführung des zweiten Schrittes jedoch Temperaturmessdaten benötigt. Diese in den gemessenen Daten "fehlenden" Messpunkte werden durch eine Extrapolation, bevorzugt lineare Extrapolation in den gespeicherten Messdaten ergänzt, so dass der zweite Schritt für alle gewünschten Messzeitpunkte durchgeführt werden kann.

Abweichend vom beschriebenen Ausführungsbeispiel könnte die vorstehende Problematik für Messzeitpunkte nahe des Endzeitpunktes tEnd auch dadurch gelöst werden, dass das Zeitintervall so festgelegt wird (vgl. oben beschriebener "erster Schritt"), dass dessen Ende (rechte Grenze) spätestens bei tEnd endet. Mit anderen Worten wird bei dieser alternativen Ausführungsform bereits im ersten Schritt das Zeitintervall so festgelegt, dass dieses nicht über tEnd hinausreicht. Das oben beschriebene Beispiel für die Durchführung des ersten Schrittes, bei welchem das Zeitintervall eine Zeitspanne von 1/3 x (ti - tStart) nach ti endet, kann hierfür z. B. so modifiziert werden, dass die in dieser Weise berechnete Zeitspanne bedarfsweise so abgekürzt (verkleinert) wird, dass diese bereits bei tEnd endet.

Zusammenfassend basiert die Berechnung des cDTA-Signals cDTA(t) bei dem Ausführungsbeispiel gemäß der Fig. 1 und 2 darauf, dass für jeden gewünschten Messzeitpunkt eine eigene Anpassungskurve (vgl. TRef1* bzw. TRef2* in Fig. 1) berechnet wird, wofür jeweils die gemessenen Temperaturdaten vor und nach dem betreffenden Messzeitpunkt (vgl. Intervall von 2/3 x ti bis 4/3 x ti in Fig. 1) berücksichtigt werden, und dass diese Berechnung der Anpassungskurve gewissermaßen nach Art eines "gleitenden Auswertefensters" (hinsichtlich der Zeitachse) für alle gewünschten Zeitpunkte wiederholt wird. Bevorzugt ist die Auswertefensterbreite (Dauer des festgelegten Zeitintervalls), wie z. B. bei dem vorstehend beschriebenen Ausführungsbeispiel auch der Fall, eine Funktion der Zeitposition ti. Durch Zusammensetzung der Einzelergebnisse (wie z. B. cDTA(ti) aus Fig. 1) ergibt sich das gewünschte cDTA-Signal cDTA(t), wie es in Fig. 2 beispielhaft dargestellt ist.

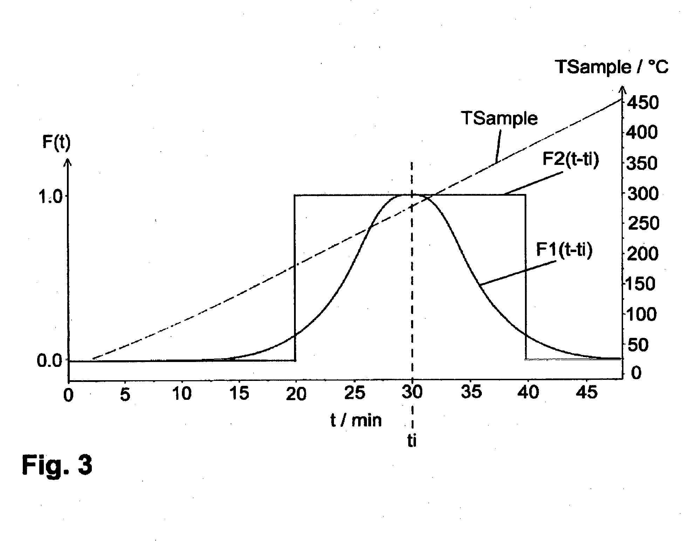

Nachfolgend wird mit Bezug auf Fig. 3 ein modifiziertes Ausführungsbeispiel eines Verfahrens zur Durchführung einer berechnete Differenz-Thermo-Analyse erläutert, wobei lediglich auf die Unterschiede zu dem bereits beschriebenen Ausführungsbeispiel eingegangen wird.

Die Modifikation bezieht sich auf die ersten beiden Schritte.

Bei diesen beiden Schritten wird kein Zeitintervall "mit festen Grenzen" festgelegt (erster Schritt) und sodann eine Anpassungsfunktion für dieses Zeitintervall mit gleichwertiger Berücksichtigung aller im Zeitintervall liegenden Messpunkte durchgeführt (zweiter Schritt). Vielmehr wird bei der modifizierten Ausführungsform im zweiten Schritt die Berechnung der Anpassungsfunktion unter Berücksichtigung einer Gewichtung der im Zeitintervall liegenden Temperaturdaten durchgeführt. Ein Maximalwert der hierfür verwendeten Gewichtungsfunktion ist hierbei bevorzugt zumindest für den betreffenden Messzeitpunkt (oder in dessen Nähe) gegeben. In Fig. 3 ist beispielhaft als Gewichtungsfunktion eine Gaussfunktion F1(t - ti) für den Messzeitpunkt ti eingezeichnet. Diese Gewichtungsfunktion F1 besitzt ihr Maximum am betreffenden Messzeitpunkt ti und verringert sich mit zunehmenden Abstand von ti.

Die im zweiten Schritt durchgeführte Berechnung der Anpassungsfunktion für den Zeitpunkt ti berücksichtigt demnach die unterschiedlichen Gewichte der einzelnen Messpunkte innerhalb des festgelegten Zeitintervalls. Insofern könnte man bei der Modifikation auch davon sprechen, dass im ersten Schritt das Zeitintervall anstatt mit "festen Grenzen" mit "unscharfen Grenzen" festgelegt wird.

In einer bevorzugten Ausgestaltung ist für jeden Messzeitpunkt eine Breite, z. B. Halbwertsbreite bei der dargestellten Gaussfunktion F1, vorgesehen, welche in Abhängigkeit von dem betreffenden Messzeitpunkt festgelegt wird. In einer Ausführungsform ist beispielsweise vorgesehen, dass die Breite der Gewichtungsfunktion umso größer gewählt wird, je später der betreffende Messzeitpunkt liegt. Die Breite kann z. B. proportional zum betreffenden Messzeitpunkt (bezogen auf den Startzeitpunkt des Temperaturprogramms) gewählt werden.

Abweichend vom beschriebenen Ausführungsbeispiel, bei welchem eine symmetrische Gewichtungsfunktion (hier: Gaussfunktion) gewählt wurde, kann diese Gewichtungsfunktion im Rahmen der Erfindung auch asymmetrisch sein.

Würde man anstatt der Gaussfunktion F1 eine in Fig. 3 ebenfalls eingezeichnete Rechteckfunktion F2 als die Gewichtungsfunktion verwenden, so entspräche das Verfahren wieder dem Verfahren gemäß des oben bereits beschriebenen Ausführungsbeispiels. Die Gewichtung mit einer Rechteckfunktion ist letztlich gleichbedeutend mit der Festlegung eines Zeitintervalls "mit festen Grenzen" (entsprechend den Flanken des Rechtecks). Hinsichtlich des modifizierten Ausführungsbeispiels besonders interessant sind daher Gewichtungsfunktionen mit einer von der Rechteckform abweichenden Form, insbesondere mit monoton oder streng monoton mit zunehmender Entfernung vom betreffenden Messzeitpunkt abnehmendem Wert der Gewichtungsfunktion. Die in Fig. 3 explizit dargestellte Gaussfunktion F1 ist insofern lediglich beispielhaft zu verstehen. Auch könnte stattdessen z. B. eine Dreieckfunktion, Trapezfunktion oder dergleichen verwendet werden.

Die übrigen Verfahrensschritte des modifizierten Ausführungsbeispiels entsprechen den oben bereits mit Bezug auf die Fig. 1 und 2 beschriebenen Schritten.

Auch mit diesem modifizierten Verfahren lässt sich demnach eine qualitativ hochwertige cDTA-Kurve (zeitabhängiges cDTA-Signal) für einen gewünschten Zeitraum, insbesondere auch für die Gesamtdauer der Probentemperierung berechnen.

**Patentansprüche**

1. Verfahren zur Durchführung einer Differenz-Thermo-Analyse, bei welchem eine in einem temperierbaren Probenraum angeordnete Probe gemäß eines linearen Temperaturprogramms ausgehend von einer Starttemperatur (TStart) bis hin zu einer Endtemperatur (TEnd) temperiert wird, wobei aus dem Ergebnis einer während der Temperierung zu einer Vielzahl von Messzeitpunkten (t0, ...ti, ...tn) durchgeführten Messung der Probentemperatur (TSample) ein cDTA-Signal (cDTA) als Differenz zwischen gemessener Probentemperatur (TSample) und einer gemäß eines Temperaturverlaufmodells berechneten Referenztemperatur (TRef) berechnet wird, **dadurch gekennzeichnet, dass** für jeden Messzeitpunkt (ti) die zugehörige Referenztemperatur (TRef(ti)) jeweils durch folgende Schritte berechnet wird:

   a) Festlegung eines den betreffenden Messzeitpunkt (ti) enthaltenden Zeitintervalls, derart, dass der betreffende Messzeitpunkt (ti) in der Mitte des Zeitintervalls oder in einem Abstand zur Mitte des Zeitintervalls liegt, der kleiner als 30 % der Länge des Zeitintervalls ist,
   b1) Berechnen einer nicht-linearen Anpassungsfunktion für den gemessenen Probentemperaturverlauf (TSample(t)) in dem für den betreffenden Messzeitpunkt (ti) im Schritt a) festgelegten Zeitintervall,
   c) Berechnen der dem betreffenden Messzeitpunkt (ti) zugehörigen Referenztemperatur (TRef(ti)) als Wert der im Schritt b1) berechneten Anpassungsfunktion für den Messzeitpunkt (ti).

2. Verfahren nach Anspruch 1, wobei im Schritt a) der Beginn des Zeitintervalls um eine Zeitspanne vor dem betreffenden Messzeitpunkt (ti) festgelegt wird, die vom Messzeitpunkt (ti) abhängig ist.

3. Verfahren nach einem der vorangehenden Ansprüche, wobei im Schritt a) das Ende des Zeitintervalls um eine Zeitspanne nach dem betreffenden Messzeitpunkt (ti) festgelegt wird, die vom Messzeitpunkt abhängig ist.

4. Verfahren nach einem der vorangehenden Ansprüche, wobei im Schritt a) die Länge des Zeitintervalls in Abhängigkeit vom Messzeitpunk (ti) festgelegt wird.

5. Verfahren nach einem der vorangehenden Ansprüche, wobei im Schritt a) im Falle eines vor den Startzeitpunkt (tStart) oder nach den Endzeitpunkt (tEnd) des Temperaturprogramms reichenden Zeitintervalls für die Durchführung des Schrittes b) eine Extrapolation, bevorzugt lineare Extrapolation, der vor dem Startzeitpunkt (tStart) bzw. nach dem Endzeitpunkt (tEnd) zu verwendenden Probentemperaturen (TSample) durchgeführt wird.

6. Verfahren nach einem der vorangehenden Ansprüche, wobei im Schritt b1) als die Anpassungsfunktion ein Polynom zweiten Grades verwendet wird.

7. Verfahren nach einem der vorangehenden Ansprüche, wobei der Schritt b1) durch folgende Schritte ergänzt wird:

b2) Unterdrückung von Messzeitpunkten, für welche die gemessene Probentemperatur (TSample) um mehr als einen vorbestimmten Betrag von dem zugehörigen Wert der Anpassungsfunktion abweicht, und
b3) Berechnen einer korrigierten Anpassungsfunktion zur Verwendung im Schritt c), wie in Schritt b1), jedoch unter Außerachtlassung oder Geringgewichtung der unterdrückten Messpunkte.

8. Verfahren nach einem der vorangehenden Ansprüche, wobei im Schritt b1) die Berechnung der Anpassungsfunktion unter Berücksichtigung einer Gewichtung (F(t)) der im Zeitintervall liegenden Probentemperaturen (TSample) durchgeführt wird.

**Claims**

1. A method for performing a differential thermal analysis, wherein a sample disposed in a temperature-regulated sample chamber is temperature-regulated according to a linear temperature program proceeding from a start temperature (TStart) up to an end temperature (TEnd), wherein, from the result of a measurement of the sample temperature (TSample) carried out during the temperature regulation at a plurality of measurement times (to, ...ti, ...tn), a cDTA signal (cDTA) is calculated as the difference between the measured sample temperature (TSample) and a reference temperature (TRef) calculated according to a temperature course model,
**characterised in that** for each measurement time (ti) the associated reference temperature (TRef(ti)) is calculated in each case by the following steps:

a) fixing of a time interval containing the measurement time (ti) concerned, in such a way that the measurement time (ti) concerned lies in the middle of the time interval or at a distance from the middle of the time interval that is less than 30% of the length of the time interval,
b1) calculation of a non-linear adaptation function for the measured sample temperature course (TSample(t)) in the time interval fixed for the measurement time (ti) concerned in step a),
c) calculation of the reference temperature (TRef(ti)) associated with the measurement time (ti) concerned as the value of the adaptation function calculated in step b1) for the measurement time (ti).

2. The method according to claim 1, wherein in step a) the start of the time interval is fixed by a time period before the measurement time (ti) concerned, said time period being dependent on the measurement time (ti).

3. The method according to any one of the preceding claims, wherein in step a) the end of the time interval is fixed by a time period after the measurement time (ti) concerned, said time period being dependent on the measurement time.

4. The method according to any one of the preceding claims, wherein in step a) the length of the time interval is fixed as a function of the measurement time (ti).

5. The method according to any one of the preceding claims, wherein in step a), in the case of a time interval for the performance of step b) extending before the start point (tStart) or after the end point (tEnd) of the temperature program, an extrapolation, preferably a linear extrapolation, of the sample temperatures (TSample) to be used before the start time (tStart) or after the end time (tEnd) is carried out.

6. The method according to any one of the preceding claims, wherein in step b1) a second-degree polynomial is used as the adaptation function.

7. The method according to any one of the preceding claims, wherein step b1) is supplemented by the following steps:

b2) elimination of measurement times for which the measured sample temperature (TSample) diverges by more than a predetermined amount from the associated value of the adaptation function, and
b3) calculation of a corrected adaptation function for use in step c), as in step b1), but disregarding the eliminated measurement points or assigning a low weighting thereto.

8. The method according to any one of the preceding claims, wherein in step b1) the calculation the adaptation function is carried out taking account of a weighting (F(t)) of the sample temperatures (TSample) lying in the temperature interval.

## Revendications

1. Procédé pour effectuer une analyse thermique différentielle, dans lequel un échantillon, disposé dans un compartiment à échantillon pouvant être tempéré, est tempéré conformément à un programme de température linéaire en partant d'une température de départ (TStart) jusqu'à une température finale (TEnd), dans lequel on calcule, à partir du résultat d'une mesure de la température d'échantillon (TSample) effectuée pendant l'équilibrage de température à une pluralité d'instants de mesure (t0, ... ti, ...tn), un signal cDTA (cDTA) en tant que différence entre une température d'échantillon mesurée (TSample) et une température de référence (TRef) calculée conformément à une modèle de variation de température,
**caractérisé en ce que**, pour chaque instant de mesure (ti), on calcule la température de référence associée (TRef(ti)) grâce aux étapes respectives suivantes :

     a) détermination d'un intervalle de temps contenant l'instant de mesure (ti) concerné de manière à ce que l'instant de mesure (ti) concerné se situe au milieu de l'intervalle de temps ou à une distance par rapport au milieu de l'intervalle de temps, laquelle est inférieure à 30 % de la longueur de l'intervalle de temps,
     b1) calcul d'une fonction d'adaptation non linéaire pour la variation de température d'échantillon (TSample(t)) mesurée dans l'intervalle de temps déterminé pour l'instant de mesure (ti) lors de l'étape a),
     c) calcul de la température de référence (TRef(ti)) associée à l'instant de mesure (ti) concerné en tant que valeur de la fonction d'adaptation calculée lors de l'étape b1) pour l'instant de mesure (ti).

2. Procédé selon la revendication 1, dans lequel, au cours de l'étape a), on détermine le début de l'intervalle de temps de l'ordre d'un laps de temps avant l'instant de mesure (ti) concerné, lequel dépend de l'instant de mesure (ti).

3. Procédé selon l'une des revendications précédentes, dans lequel, au cours de l'étape a), on détermine la fin de l'intervalle de temps de l'ordre d'un laps de temps après l'instant de mesure (ti) concerné, lequel dépend de l'instant de mesure.

4. Procédé selon l'une des revendications précédentes, dans lequel, au cours de l'étape a), la longueur de l'intervalle de temps est déterminée en fonction de l'instant de mesure (ti).

5. Procédé selon l'une des revendications précédentes, dans lequel, à l'étape a), en cas d'un intervalle de temps s'étendant avant l'instant de départ (tStart) ou après l'instant final (tEnd) du programme de température pour exécuter l'étape b), on réalise une extrapolation, de préférence une extrapolation linéaire, des températures d'échantillon (TSample) à utiliser avant l'instant de départ (tStart) ou après l'instant final (tEnd).

6. Procédé selon l'une des revendications précédentes, dans lequel, au cours de l'étape b1), on utilise un polynôme de deuxième degré en tant que fonction d'adaptation.

7. Procédé selon l'une des revendications précédentes, dans lequel l'étape b1) est complétée par les étapes suivantes :

     b2) suppression d'instants de mesure pour lesquels la température d'échantillon (TSample) mesurée diverge de plus d'un montant prédéterminé de la valeur associée de la fonction d'adaptation, et
     b3) calcul d'une fonction d'adaptation corrigée pour l'utilisation à l'étape c) tout comme à l'étape b1), mais en négligeant ou pondérant faiblement les points de mesure supprimés.

8. Procédé selon l'une des revendications précédentes, dans lequel, au cours de l'étape b1), le calcul de la fonction d'adaptation est réalisé en tenant compte d'une pondération (F(t)) des températures d'échantillon (TSample) se situant dans l'intervalle de temps.

**Fig. 1**

**Fig. 2**

EP 2 759 831 B1

Fig. 3

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19934448 A1

**In der Beschreibung aufgeführte Nicht-Patentliteratur**

- Single thermocouple differential thermal analysis with application to quantitative low level detection of free crystalline quartz. **SHEFFIELD G S et al.** THERMOCHIMICA ACTA. ELSEVIER SCIENCE PUBLISHERS, 01. September 1979, vol. 32, 45-52